Europäisches Patentamt

European Patent Office

Office européen des brevets

(11) Veröffentlichungsnummer: **0 307 547**
**A1**

## (12) EUROPÄISCHE PATENTANMELDUNG

(21) Anmeldenummer: 88109155.7

(22) Anmeldetag: 08.06.88

(51) Int. Cl.⁴: **B60G 3/20**

(30) Priorität: 02.09.87 DE 3729238

(43) Veröffentlichungstag der Anmeldung:
**22.03.89 Patentblatt 89/12**

(84) Benannte Vertragsstaaten:
**DE FR GB IT SE**

(71) Anmelder: **BAYERISCHE MOTOREN WERKE AG**
**Postfach 40 02 40 Petuelring 130 - AJ-31**
**D-8000 München 40(DE)**

(72) Erfinder: **Matschinsky, Wolfgang**
**Georgenschwaigstrasse 18**
**D-8000 München 40(DE)**
Erfinder: **Sautter, Wolfgang**
**Riesheimerstrasse 24**
**D-8032 Gräfelfing(DE)**

(54) **Hinterradaufhängung.**

(57) Die beschriebene Aufhängung des hinteren, angetriebenen Rades (1) umfaßt einen das Rad (1) lagernden Radträger (4), der gelenkig über einen Längsarm (5) mit dem Fahrzeugaufbau verbunden ist. Es sind ferner drei Querlenker (6, 7, 8) vorgesehen, die aufbauseitig an dem Hilfsrahmen (9) angelenkt sind.

Um den Hilfsrahmen (9) steifer gegenüber elastischen Verformungen durch von den Querlenkern (6, 7, 8) ausgeübten Seitenkräften machen zu können, sind zwei Querlenker (7, 8) oberhalb der Radmitte und lediglich ein Querlenker (6) unterhalb der Radmitte angeordnet. Die von den oberen Querlenkern (7, 8) auf den Hilfsrahmen (9) übertragenen Querkräfte werden in diesen Hilfsrahmen (9) im wesentlichen in dessen Ebene eingeleitet, so daß dieser Rahmen diese Kräfte gut aufzunehmen vermag. Die weiter unten vom unteren Querlenker (6) übertragenen Querkräfte werden in einem Bereich des Hilfsrahmens (9) eingeleitet, in dem dieser auf einfachere Weise genügend steif ausgebildet werden kann.

EP 0 307 547 A1

## Hinterradaufhängung

Die Erfindung bezieht sich auf eine Aufhängung für die angetriebenen Hinterräder von Kraftfahrzeugen nach dem Oberbegriff des Patentanspruchs 1.

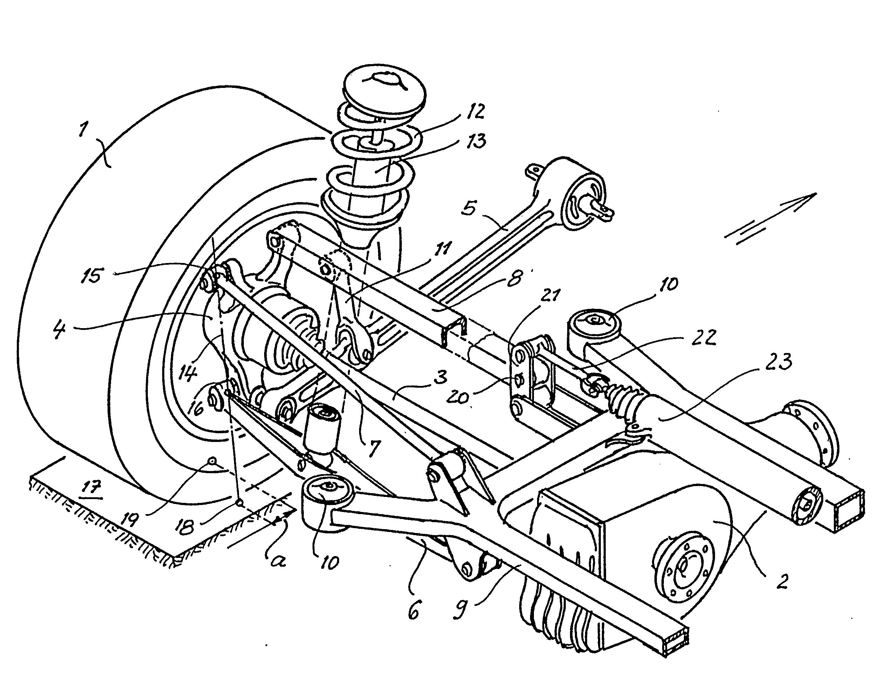

Bei einer bekannten derartigen Radaufhängung (DE-PS 33 31 247, Fig. 16) sind zwei untere und ein oberer Querlenker vorgesehen. Bei angetriebenen Hinterachsen ist es schwierig, die aufbauseitigen Anlenkpunkte der Querlenker im unteren Bereich des Fahrzeugaufbaus in Fahrzeugquerrichtung ausreichend steif auszubilden. In diesem unteren Bereich ist in Fahrzeugmitte das Hinterachsgetriebe angeordnet, das einen beträchtlichen Raumbedarf hat. Der für das Hinterachsgetriebe erforderliche Raum behindert Querverstrebungen des Fahrzeugaufbaus oder eines mit diesem Aufbau - ggf. elastisch -zu verbindenden Hilfsträgers. Die mangelnde Quersteifigkeit der aufbauseitigen Lenkerlager führt zu unerwünschten elastischen Lenkwinkeln, vor allem beim Bremsen oder Beschleunigen, wenn die beiden die Laufrichtung des Rades bestimmenden Querlenker tief unten angelenkt sind. Wenn man einen dieser Querlenker auch noch quer verstellt, um eine gewisse Lenkbarkeit der hinteren angetriebenen Räder zu erreichen, so ist es wegen der geschilderten Raumprobleme besonders schwierig, die Lenkmechanismen unterzubringen.

Der Erfindung liegt die Aufgabe zugrunde, eine Radaufhängung der vorausgesetzten Bauart zu schaffen, die eine steife Anlenkung der die Laufrichtung der Räder bestimmenden Querlenker ermöglicht. Ggf. soll auch ein Lenkmechanismus günstig unterzubringen sein.

Diese Aufgabe wird bei einer Radaufhängung nach dem Oberbegriff des Patentanspruchs 1 durch die in dessen Kennzeichen angegebenen Merkmale gelöst. Dank dieser Maßnahmen werden die von zwei der drei Querlenker in den Fahrzeugaufbau oder einen Hilfsrahmen eingeleiteten Querkräfte weitgehend in einer Ebene, und zwar im wesentlichen oberhalb des Hinterachsgetriebes abgestützt. Der Aufbau oder der Hilfsrahmen können vergleichsweise einfach so ausgesteift werden, daß diese Kräfte ohne nennenswerte aufbauseitige elastische Verformungen der Aufnahmen der Lenkerlager aufgenommen werden. Ist der untere Querlenker nach hinten versetzt, so steht einer vergleichsweise einfachen Aussteifung des Aufbaus oder des Hilfsrahmens in diesem hinteren Bereich nicht mehr das Hinterachsgetriebe im Wege, so daß auch der untere Lenker steif abgestützt werden kann. Soll mit der Radaufhängung auch eine gewisse Lenkbarkeit der hinteren angetriebenen Räder erreicht werden, so ist es relativ einfach, für einen der hierzu in Frage kommenden oberen Querlenker, zweckmäßig den vorderen, einen Lenkmechanismus unterzubringen.

Die Erfindung ist im folgenden anhand eines in der Zeichnung dargestellten Ausführungsbeispiels näher erläutert. Die Zeichnung zeigt eine perspektivische Ansicht einer Ausführungsform der neuen Hinterradaufhängung.

In der Zeichnung ist mit 1 ein hinteres, angetriebenes Rad eines Kraftfahrzeugs bezeichnet. Das Rad 1 kann vom Hinterachsgetriebe 2 über die Antriebswelle 3 angetrieben werden. Das Rad 1 ist durch einen Radträger 4 gelagert, der mit dem Fahrzeugaufbau über einen Längsarm 5 und über die Querlenker 6, 7 und 8 in Verbindung steht. Bei dem dargestellten Ausführungsbeispiel sind die genannten Querlenker aufbauseitig mit einem Hilfsrahmen 9 verbunden, der seinerseits mit dem (nicht dargestellten) Fahrzeugaufbau in bekannter Weise über Gummielemente 10 in Verbindung steht.

Die zwei Querlenker 7 und 8 sind oberhalb der Radmitte angeordnet und der Querlenker 6 liegt unterhalb der Radmitte. Der schwenkbar am Radträger 4 angelenkte Längsarm 5 ist über eine nach oben gerichtete Stützstrebe 11 mit dem vorderen, oberen Querlenker 8 verbunden. Die Wirkungsweise der Stützstrebe 11, zusammen mit dem Längsarm 5 und dem oberen Querlenker 8, ist in der schon genannten DE-PS 33 31 247 beschrieben.

Der untere Querlenker 6 stützt die Tragfeder 12 und den Dämpfer 13 ab. Im Bereich des Radträgers 4 ist der obere hintere Querlenker 7 gegenüber dem unteren Querlenker 6 nach hinten versetzt, so daß die Einheit aus Feder 12 und Dämpfer 13 gut einerseits an der Antriebswelle 3 und andererseits an dem oberen Querlenker 7 vorbeigeführt werden kann.

Die Verbindungslinie 14 der radträgerseitigen Gelenke 15 und 16 des hinteren oberen Querlenkers 7 und des unteren Querlenkers 6 durchstößt die Fahrbahn 17 hinter der Radmittenquerebene (Abstand a). Der Durchstoßpunkt 18 kann dabei so gewählt werden, daß er etwa um den "Reifennachlauf" hinter dem Radaufstandspunkt 19 liegt. Auf diese Weise belasten am Rad 1 angreifende Seitenkräfte den vorderen oberen Querlenker 8 kaum auf Zug oder Druck.

Bei dem dargestellten Ausführungbeispiel ist das aufbauseitige Gelenk 20 des vorderen oberen Querlenkers 8 in Fahrzeugquerrichtung verstellbar, um das hintere Rad 1 in gewissen Grenzen lenkbar zu machen. Das Gelenk 20 ist hierzu an einem annähernd vertikalen gerichteten Schwinghebel 21 vorgesehen, der über eine Verbindungsstange 22 von einem Lenkgetriebe 23 verschwenkbar ist. Der Schwinghebel 21 nimmt weitgehend die von der Stützstrebe 11 über den Querlenker 8 auf das Gelenk 20 ausgeübten, im wesentlichen vertikalen Kräfte auf, so daß das Lenkgetriebe 23 von solchen Kräften freigehalten ist. Der Schwinghebel 20 ist an dem schon weiter oben erwähnten Hilfsrahmen 9 gelagert, an dem weiterhin auch das Lenkgetriebe 23 befestigt ist.

**Ansprüche**

1. Radaufhängung für die angetriebenen Hinterräder von Kraftfahrzeugen, mit einem das Rad lagernden Radträger, der über einen Längsarm und drei Querlenker mit dem Fahrzeugaufbau oder dergleichen verbunden ist, dadurch gekennzeichnet, daß zwei Querlenker (7, 8) oberhalb der Radmitte und lediglich ein Querlenker (6) unterhalb der Radmitte angeordnet sind.

2. Radaufhängung nach Anspruch 1, mit einem schwenkbar am Radträger unten angelenkten Längsarm, der über eine nach oben gerichtete Stützstrebe mit einem oberen Querlenker verbunden ist, dadurch gekennzeichnet, daß die Stützstrebe (11) am vorderen der beiden oberen Querlenker (8) angreift.

3. Radaufhängung nach Anspruch 1, dadurch gekennzeichnet, daß der untere Querlenker (6) die Tragfeder (12) und den Dämpfer (13) abstützt.

4. Radaufhängung nach Anspruch 3, dadurch gekennzeichnet, daß im Bereich des Radträgers (4) der obere hintere Querlenker (7) gegenüber dem unteren Querlenker (6) nach hinten versetzt ist.

5. Radaufhängung nach Anspruch 4, dadurch gekennzeichnet, daß die Verbindungslinie (14) der radträgerseitigen Gelenke (15, 16) des hinteren oberen Querlenkers (7) und des unteren Querlenkers (6) die Fahrbahn (17) hinter der Radmittenquerebene durchstößt.

6. Radaufhängung nach Anspruch 2, dadurch gekennzeichnet, daß das aufbauseitige Gelenk (20) des vorderen oberen Querlenkers (8) in Fahrzeugquerrichtung verstellbar ist.

7. Radaufhängung nach Anspruch 6, dadurch gekennzeichnet, daß das aufbauseitige Gelenk (20) des quer verstellbaren Querlenkers (8) an einem zumindest annähernd vertikal gerichteten Schwinghebel (21) vorgesehen ist, der über eine Verbindungsstange (12) von einem Lenkgetriebe (23) verschwenkbar ist.

8. Radaufhängung nach Anspruch 1, dadurch gekennzeichnet, daß die Querlenker (6, 7, 8) aufbauseitig an einem elastisch mit dem Fahrzeugaufbau verbundenen Hilfsrahmen (9) angelenkt sind.

9. Radaufhängung nach Anspruch 7 und 8, dadurch gekennzeichnet, daß der Schwinghebel (23) und das Lenkgetriebe (23) am Hilfsrahmen (9) angeordnet sind.

EP 0 307 547 A1

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 9, Nr. 202 (M-405)[1925], 20. August 1985; JP-A-60 64 010 (HONDA GIKEN KOGYO K.K.) 12-04-1985 * Figuren 1,2 * | 1 | B 60 G   3/20 |
| A | Idem<br>--- | 5 | |
| A | PATENT ABSTRACTS OF JAPAN, Band 9, Nr. 98 (M-375)[1821], 27. April 1985; & JP-A-59 223 507 (MAZDA K.K.) 15-12-1984 * Figuren 2,3 *<br>--- | 1,4 | |
| A | EP-A-0 193 090  (BMW) * Zusammenfassung; Seite 6, Absatz 3; Figur 3 *<br>--- | 1,3,8 | |
| A | PATENT ABSTRACTS OF JAPAN, Band 10, Nr. 261 (M-514)[2317], 5. September 1986; & JP-A-61 85 276 (FUJI HEAVY IND LTD) 30-04-1986<br>--- | 6,7,9 | |
| D,A | DE-A-3 331 247  (BMW) * Seite 8, Zeilen 14-18; Seite 14, Absatz 2; Figur 16 *<br>--- | 2 | |
| A | EP-A-0 150 857  (NISSAN) * Seite 13, Zeile 19 - Seite 16, Zeile 10; Figuren 7,9 *<br>----- | 6 | |

**RECHERCHIERTE SACHGEBIETE (Int. Cl.4)**

B 60 G
B 62 D

Der vorliegende Recherchenbericht wurde für alle Patentansprüche erstellt

| Recherchenort | Abschlußdatum der Recherche | Prüfer |
|---|---|---|
| DEN HAAG | 25-11-1988 | MEIJS P.C.J. |